# EUROPÄISCHE PATENTSCHRIFT

(11) **EP 0 516 970 B1**
(45) Veröffentlichungstag und Bekanntmachung des Hinweises auf die Patenterteilung: **20.12.1995**
(21) Anmeldenummer: 92107220.3
(22) Anmeldetag: 28.04.1992
(51) Int. Cl.: B65G 37/02, B65G 1/137

(54) **Verfahren und Vorrichtung zum Kommissionieren**
Method of and device for order picking
Méthode et dispositif pour la préparation de commandes

(30) Priorität: 03.06.1991 DE 4118164
(43) Veröffentlichungstag der Anmeldung: 09.12.1992
(73) Patentinhaber: RSL LOGISTIK GMBH & CO, D-86899 Landsberg (DE)
(72) Erfinder: Hart, Norbert, W-7433 Dettingen (DE)
(74) Vertreter: Grünecker, Kinkeldey, Stockmair & Schwanhäusser Anwaltssozietät

(56) Entgegenhaltungen:
- DE-A- 1 556 616
- GB-A- 2 079 708
- US-A- 4 388 994

## Beschreibung

Die Erfindung bezieht sich auf ein Verfahren zum Kommissionieren von Bekleidungsstücken unterschiedlicher Art und Größe, deren Oberbegriff von Anspruch 1 erläuterten Art und eine Vorrichtung dafür.

Ein derartiges Verfahren und eine Vorrichtung ist aus der DE-A-39 02 712 bekannt. Bei dem bekannten Verfahren werden ankommende Bekleidungsstücke nach Art und Größe sortiert und sofort auf die jedem Kunden zugeordneten Fördermittel übergeben. Alle den verschiedenen Kunden zugeordneten Fördermittel laufen in einem Förderkreis um und werden nacheinander beladen, wobei zunächst alle Bekleidungsstücke einer einzigen Art und einzigen Größe auf alle Abnehmer verteilt werden, bevor die nächste Art und Größe der Bekleidungsstücke folgt. Ist auf einem der Fördermittel eine komplette Liefergruppe zusammengestellt, so wird dieses ausgeschleust. Das bekannte Verfahren ist allerdings nur für eine relativ begrenzte Zahl von Abnehmern bzw. Liefergruppen geeignet, deren Zahl den verfügbaren Platz im Förderkreis nicht übersteigen darf.

Der Erfindung liegt somit die Aufgabe zugrunde, ein Verfahren und eine Vorrichtung zum Kommissionieren bereitzustellen, mit der auch bei relativ geringem Platzbedarf eine Vielzahl von Liefergruppen zusammengestellt werden können.

Die Aufgabe wird bei einem Verfahren durch die kennzeichnenden Merkmale des Anspruches 1 und bei einer Vorrichtung durch die kennzeichnenden Merkmale des Anspruches 4 gelöst.

Durch die erfindungsgemäße Sortierung in zwei Stufen und den Verzicht auf eine gemeinsame Förderstrecke kann der Förderkreis vermieden werden. Die Förderstrecken sind derart anzuordnen, daß nach den Auswahlkriterien mit der geringsten Vielfalt, beispielsweise der Größe oder der Art sortiert werden kann, während die Auswahlkriterien mit der größten Vielfalt, beispielsweise die Anzahl der Abnehmer, nicht jeweils durch eine eigene Förderstrecke oder einen bestimmten Platz auf einem gemeinsamen Förderkreis vertreten sein müssen.

Vorteilhafte Weiterbildungen des Verfahrens sind in den Ansprüchen 2 und 3, und vorteilhafte Weiterbildungen der Vorrichtung sind in den Ansprüchen 5 und 6 angegeben.

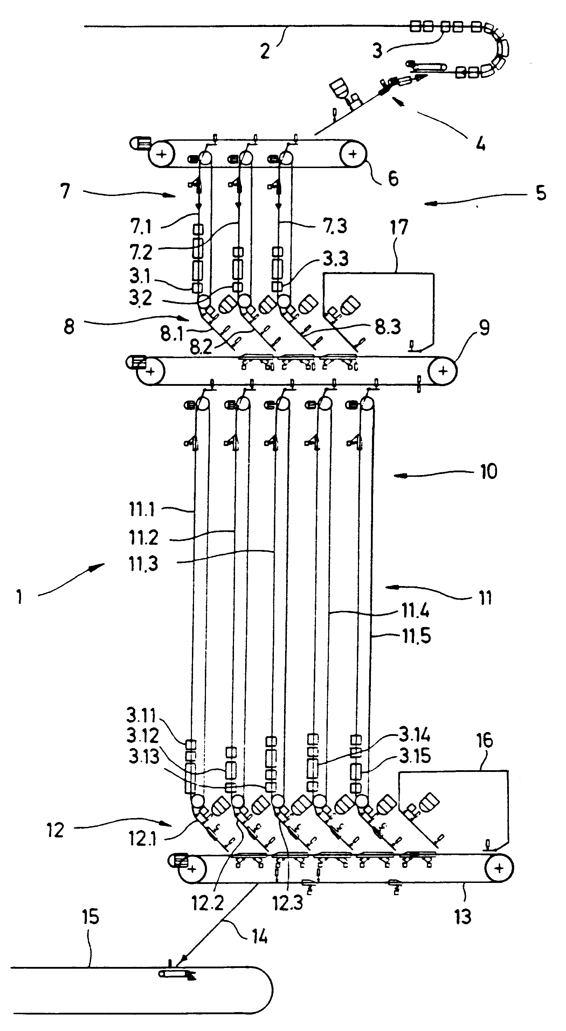

Ein Ausführungsbeispiel der Erfindung wird nachfolgend anhand der einzigen Zeichnung näher erläutert, die eine Draufsicht in schematischer Darstellung auf eine erfindungsgemäße Vorrichtung zeigt.

Die erfindungsgemäße Vorrichtung 1 weist eine Anlieferungsstrecke 2 auf, auf der beispielsweise auf Kleiderbügeln hängende Kleidungsstücke 3, ggf. mit in den Förderfluß eingeschalteten Trennbügeln, die der Überwachung der Sortiervorgänge dienen, angeliefert werden. Die als Schnecke oder Fördermittelbahn ausgebildete Anlieferungsstrecke 2 endet in einer ersten Sortierstation 4 einer ersten Sortierstufe 5. Die erste Sortierstufe 5 weist einen Verteilförderer 6 und eine Mehrzahl von Förderstrecken 7.1, 7.2 und 7.3 auf, deren Anzahl der Vielfalt des ersten Auswahlkriteriums entspricht. Wird beispielsweise in der ersten Sortierstufe 5 nach Größe sortiert, so entspricht die Anzahl der Förderstrecken 7 der Anzahl der zu verteilenden Größen.

Jede der Förderstrecken 7.1, 7.2, 7.3 mündet über ihre eigene, zweite Sortierstation 8.1, 8.2., 8.3 in einen Verteilförderer 9 einer zweiten Sortierstufe 10. Der Verteilförderer 9 ist jeweils mit einer Mehrzahl zweiter Förderstrecken 11.1, 11.2, 11.3, 11.4, 11.5 verbunden. Die Anzahl der zweiten Förderstrecken 11 entspricht der Vielfalt der nach einem zweiten Auswahlkriterium zu sortierender Bekleidungsstücke. Im vorliegenden Ausführungsbeispiel sind fünf zweite Förderstrecken 11 vorgesehen, die fünf verschiedenen Arten der Bekleidungsstücke entsprechen, also z.B. fünf verschiedenen Farben oder fünf verschiedenen Schnitten od.dgl..

Jede der zweiten Förderstrecken 11 ist über ihre eigene Sortierstation 12.1, 12.2, 12.3, 12.4 und 12.5 mit einem Sammelförderer 13 verbunden, der wiederum eine Schleuse 14 aufweist, über die die Bekleidungsstücke auf einen Abtransport-Förderer 15 ausgeschleust werden können. Der Sammelförderer 13 und der Verteilförderer 9 sind jeweils mit einem Ein- und Ausgang einer Nebenschleife 16 bzw. 17 verbunden, auf die fehlgeleitete Bekleidungsstücke und/oder Trennbügel oder dgl. überführt und aus dem normalen Warenfluß entfernt werden können.

Beim Kommissionieren werden die Bekleidungsstücke 3 vorsortiert oder ungeordnet auf der Anlieferungsstrecke 2 zur ersten Sortierstation 4 geleitet. Dort wird, bei automatischem Betrieb, die jeweilige Kodierung am Bekleidungsstück oder am Trennbügel gelesen und die Bekleidungsstücke in Vorgruppen 3.1, 3.2, 3.3 auf die erste Förderstrecke geleitet. Jede Vorgruppe 3.1, 3.2, 3.3 enthält somit Bekleidungsstücke einer einzigen Größe jedoch unterschiedlicher Art. Kommen die Kleidungsstücke bereits vorsortiert an, so können sie auf den ersten Förderstrecken 7 zusätzlich in Zwischengruppen sortiert werden, die in der Zeichnung durch in sich abgeschlossene Rechtecke dargestellt sind. Im dargestellten Ausführungsbeispiel enthält somit die Förderstrecke 7.1 eine Vorgruppe 3.1 von Bekleidungsstücken einer einzigen Größe, bereits vorsortiert in vier Zwischengruppen unterschiedlicher Arten. Jede Zwischengruppe enthält somit Bekleidungsstücke einer einzigen Größe und einer einzigen Art. Analog dazu enthalten die Förderstrecken 7.2 und 7.3 jeweils andere Größen in jeweils drei Zwischengruppen unterschiedlicher Arten. Anschließend werden die Vorgruppen 3.1 bis 3.3 der Förderstrecken 7.1 bis 7.3 aufgelöst und über die Sortierstation 8.1 auf den zweiten Verteilförderer 9 geleitet, von dem die Kleidungsstücke auf die zweiten Förderstrecken 11 gelangen. Die entsprechenden Verbindungsstellen der zweiten Förderstrecken 11 werden so geschaltet, daß auf den zweiten Förderstrecken 11 jeweils eine zweite Vorgruppe 3.11, 3.12, 3.13, 3.14, 3.15 angesammelt wird, die Kleidungsstücke der gleichen Art enthält. Damit befinden sich auf jeder der zweiten Förderstrecken 11.1 bis 11.5 jeweils Kleidungsstücke der gleichen Art aber unterschiedlicher Größe. Die ersten Vorgruppen 3.1 bis 3.3 werden derart abgearbeitet, daß zunächst alle dem gleichen, ersten Abnehmer zugeordneten Bekleidungsstücke verteilt werden. Dabei werden auch innerhalb der zweiten Vorgruppen Zwischengruppen wiederum dargestellt durch Rechtecke gebildet, die diejenige Anzahl der auf dieser Förderstrecke gesammelten Art und der bereits vorsortierten Größe von Bekleidungsstücken enthalten, die jeweils dem gleichen Abnehmer zugeordnet sind. Da die Abnehmer nacheinander abgearbeitet werden, so befinden sich auf allen Förderstrecken 11.1 bis 11.5 an erster Stelle diejenigen Zwischengruppen, die dem ersten Abnehmer zugeordnet sind. An zweiter stelle befinden sich alle diejenigen Zwischengruppen, die dem zweiten Abnehmer zugeordnet sind usw.. Für eine Vielzahl von Abnehmern müssen somit lediglich die Förderstrecken 11 entsprechend lang ausgebildet sein. Anschließend werden in der Sortierstation 12 die jedem einzelnen Abnehmer zugeordneten Liefergruppen auf dem Sammelförderer 13 zusammengestellt und über die Schleuse 14 ausgeschleust oder auf Fördermittel geladen.

In Abwandlung des beschriebenen und gezeichneten Ausführungsbeispiels können Auswahlkriterien nach Bedarf geändert werden. Anstelle des beschriebenen automatisierten Betriebs, kann die Erfindung auch bei halbautomatischen oder manuell zu betätigenden Vorrichtungen eingesetzt werden. Bei einer ausreichenden Kodierung können auch die Zwischengruppen innerhalb der ersten Vorgruppe entfallen. Bei einer höheren Anzahl von Auswahlkriterien kann die Anzahl der Sortierstufen ebenfalls erhöht werden. Darüberhinaus können bei entsprechender Kennzeichnung der Bekleidungsstücke und Vorgruppen auf jeder Förderstrecke mehrere Vorgruppen untergebracht werden.

## Patentansprüche

1. Verfahren zum Kommissionieren von Bekleidungsstücken unterschiedlicher Art und Größe, wobei die Bekleidungsstücke nach unterschiedlichen Auswahlkriterien, wie Art und Größe, sortiert und zu jeweils einem Abnehmer zugeordneten Liefergruppen zusammengestellt werden, **dadurch gekennzeichnet,** daß die Bekleidungsstücke in wenigstens zwei Stufen (5,10) sortiert werden, wobei in der ersten Stufe (5) nach einem ersten Auswahlkriterium sortiert und Vorgruppen gebildet werden, daß in der zweiten Stufe (10) nach einem zweiten Auswahlkriterium sortiert und zweite Vorgruppen gebildet werden, wobei innerhalb der zweiten Vorgruppen Zwischengruppen gebildet werden, die die jeweils einem bestimmten Abnehmer zugeordneten Bekleidungsstücke einer bestimmten Größe und einer bestimmten Art enthalten, und daß anschließend alle einem bestimmten Abnehmer zugeordneten Zwischengruppen zur Liefergruppe zusammengestellt werden.

2. Verfahren nach Anspruch 1, **dadurch gekennzeichnet,** daß auch innerhalb der ersten Vorgruppe Zwischengruppen gebildet werden.

3. Verfahren nach Anspruch 1 oder 2, **dadurch gekennzeichnet,** daß in der ersten Stufe nach Größen sortiert wird.

4. Vorrichtung zur Durchführung des Verfahrens nach einem der Ansprüche 1 bis 3, **dadurch gekennzeichnet,** daß wenigstens zwei Sortierstufen (5, 10) vorgesehen sind, wobei jede Sortierstufe (5, 10) eine Mehrzahl Förderstrecken (7,1 bis 7,3 , 11,1 bis 11,5) enthält und jede Förderstrecke (7,1 bis 7,3) der ersten Sortierstufe (5) mit jeder Förderstrecke (11,1 bis 11,5) der zweiten Sortierstufe (10) zu verbinden ist, und daß in Förderrichtung nach der letzten Sortierstufe (10) ein Sammelförderer (13) vorgesehen ist.

5. Vorrichtung nach Anspruch 4, **dadurch gekennzeichnet,** daß die Anzahl der Förderstrecken (7,1 bis 7,3) in der ersten Sortierstufe (5) der Anzahl der zu sortierenden, ersten Vorgruppen (3,1 bis 3,3) nach dem ersten Auswahlkriterium entspricht.

6. Vorrichtung nach Anspruch 4 oder 5, **dadurch gekennzeichnet,** daß die Anzahl der Förderstrecken (11,1 bis 11,5) in der zweiten Sortierstufe (10) der Anzahl der zweiten Vorgruppen (3,11 bis 3,15) nach dem zweiten Auswahlkriterium entspricht.

## Claims

1. A process for consigning garments of different kinds and sizes in which the garments are sorted according to different criteria such as type and size, and are made up into delivery groups each assigned to one customer, characterized in that the garments are sorted in at least two stages (5, 10), so that in the first stage (5) sorting is undertaken and initial groups are formed according to a first criterion, and in the second stage (10) sorting is undertaken and secondary initial groups are formed according to a second criterion, with formation within the secondary initial groups of intermediate groups containing the garments of a specific size and type assigned to a specific customer, and in that all intermediate groups assigned to a specific customer are then assembled to form the delivery group.

2. A process according to Claim 1, characterized in that intermediate groups are also formed within the primary initial group.

3. A process according to Claim 1 or 2, characterized in that sorting in the first stage is according to sizes.

4. A device for carrying out the process according to any one of Claims 1 to 3, characterized in that at least two sorting stages (5, 10) are provided, with each sorting stage (5, 10) comprising a plurality of transfer lines (7.1 to 7.3, 11.1 to 11.5), and each transfer line (7.1 to 7.3) of the first sorting stage (5) being connectable to each transfer line (11.1 to 11.5) of the second sorting stage (10), and in that a gathering conveyor (13) is provided after the last sorting stage (10), in the conveying direction.

5. A device according to Claim 4, characterized in that the number of transfer lines (7.1 to 7.3) in the first sorting stage (5) corresponds to the number of primary initial groups (3.1 to 3.3) to be sorted according to the first criterion.

6. A device according to Claim 4 or 5, characterized in that the number of transfer lines (11.1 to 11.5) in the second sorting stage (10) corresponds to the number of secondary initial groups (3.11 to 3.15) according to the second criterion.

## Revendications

1. Procédé pour la préparation de commandes de vêtements de différentes catégories et tailles, les vêtements étant triés d'après différents critères de sélection, tels que catégorie et taille, et regroupés en lots de livraison respectivement associés à un acheteur, caractérisé en ce que les vêtements sont triés dans deux étages (5, 10), au moins, le tri étant assuré dans le premier étage d'après un premier critère de sélection et des lots préalables étant formés, en ce que le tri est assuré dans le second étage d'après un second critère de sélection et des seconds lots préalables sont formés, des lots intermédiaires, qui comportent les vêtements, respectivement associés à un acheteur donné, d'une taille et d'une catégorie définies, étant formés à l'intérieur des seconds lots préalables, et en ce que tous les lots intermédiaires, associés à un acheteur donné, sont ensuite regroupés en lot de livraison.

2. Procédé suivant la revendication 1, caractérisé en ce que des lots intermédiaires sont également formés à l'intérieur du premier lot préalable.

3. Procédé suivant l'une des revendications 1 ou 2, caractérisé en ce que le tri dans le premier étage est assuré d'après les tailles.

4. Dispositif pour la réalisation du procédé suivant l'une des revendications 1 à 3, caractérisé en ce qu'au moins deux étages de tri (5, 10) sont prévus, chaque étage de tri (5, 10) comportant plusieurs voies de transport (7.1 à 7.3, 11.1 à 11.5), et chaque voie de transport (7.1 à 7.3) du premier étage de tri (5) devant être reliée à chaque voie de transport (11.1 à 11.5) du second étage de tri (10), et en ce qu'un convoyeur de regroupement (13) est prévu après le dernier étage de tri (10), dans le sens de transport.

5. Dispositif suivant la revendication 4, caractérisé en ce que le nombre des voies de transport (7.1 à 7.3) dans le premier étage de tri (5) correspond au nombre des premiers lots préalables (3.1 à 3.3), à trier d'après le premier critère de sélection.

6. Dispositif suivant l'une des revendications 4 ou 5, caractérisé en ce que le nombre des voies de transport (11.1 à 11.5) dans le second étage de tri (10) correspond au nombre des seconds lots préalables (3.11 à 3.15), d'après le second critère de sélection.
